# FASCICULE DE BREVET EUROPEEN

(11) **EP 1 928 791 B1**
(45) Date de publication et mention de la délivrance du brevet: **30.04.2014**
(21) Numéro de dépôt: 06793809.2
(22) Date de dépôt: 25.09.2006
(51) Int. Cl.: C02F 1/44, B01D 61/16, B01D 21/00

(54) **PROCEDE DE TRAITEMENT D'EAUX COMPRENANT UNE ETAPE DE DECANTATION RAPIDE SUIVIE D'UNE ETAPE DE FILTRATION DIRECTEMENT SUR MEMBRANES DE MICRO OU D'ULTRA-FILTRATION, ET DISPOSITIF CORRESPONDANT**
WASSERBEHANDLUNGSVERFAHREN MIT EINEM BESCHLEUNIGTEN ABSETZSCHRITT UNMITTELBAR GEFOLGT VON EINER FILTRATION ÜBER MIKRO- ODER ULTRAFILTRATIONSMEMBRANEN UND DAFÜR GEEIGNETE VORRICHTUNG
WATER TREATMENT METHOD COMPRISING A RAPID SETTLING STEP FOLLOWED BY A FILTRATION STEP THAT IS PERFORMED DIRECTLY ON THE MICRO- OR ULTRA-FILTRATION MEMBRANES AND CORRESPONDING DEVICE

(30) Priorité: 30.09.2005 FR 0510045
(43) Date de publication de la demande: 11.06.2008
(73) Titulaire: Veolia Water Solutions & Technologies Support, 94410 Saint-Maurice (FR)
(72) Inventeur: GAID, Abdelkader, F-94417 Saint-maurice Cedex (FR)
(74) Mandataire: Larcher, Dominique
(86) Numéro de dépôt international: PCT/EP2006/066703
(87) Numéro de publication internationale: WO 2007/039509

(56) Documents cités:
- WO-A-02/42223
- WO-A-03/095371
- US-A1- 2004 217 058
- PATENT ABSTRACTS OF JAPAN vol. 017, no. 547 (C-1116), 4 octobre 1993 (1993-10-04) & JP 05 154354 A (EBARA INFILCO CO LTD), 22 juin 1993 (1993-06-22)
- CYNA B ET AL: "Two years of nanofiltration at the Mery-sur-Oise plant, France" DESALINATION, ELSEVIER, AMSTERDAM, NL, vol. 147, no. 1-3, 10 septembre 2002 (2002-09-10), pages 69-75, XP004386411 ISSN: 0011-9164
- V PLUM: 'The Actiflo method' WATER SCIENCE & TECHNOLOGY vol. 37, no. 1, 01 Janvier 1998, pages 269 - 275, XP055079923 DOI: 10.1016/S0273-1223(97)00778-6 ISSN: 0273-1223

## Description

Le domaine de l'invention est celui du traitement des eaux. Plus précisément, l'invention concerne les procédés de traitement d'eaux comprenant une étape de séparation liquide-solide et au moins une étape de filtration.

L'invention s'applique en particulier, mais non exclusivement, au prétraitement d'eaux destinées à subir ultérieurement un traitement membranaire d'osmose inverse ou de nanofiltration.

Plus généralement, l'invention s'applique notamment :
- au domaine de la réutilisation d'eau usée pour diverses utilisations (eau de process industrielle, eau spécifique pour l'industrie micro-électronique, infiltration de nappes, eau potable, etc...).
- au dessalement d'eaux de mer ou saumâtres ;
- au traitement des eaux de surface à forte variation de turbidité et/ou de matières organique ;
- au traitement des eaux de surface à forte variation algale, ou de toutes autres substances organiques ou minérales présentant un pouvoir colmatant.

Les eaux de surface conventionnelles (eaux de rivière, lac ou barrage) sont parfois soumises à un traitement de filtration sur membranes de nanofiltration pour en diminuer la teneur en pesticides et autre micro-polluants organiques qui peuvent être enlevés par nanofiltration.

La nanofiltration permet également d'enlever les anions bivalents, tels que les sulfates, mais aussi de réduire la teneur en d'autres sels, tels que des nitrates par exemple.

L'osmose inverse utilise des membranes similaires à celles de nanofiltration mais disposant d'un pouvoir de séparation supérieur. Elle permet d'enlever à peu près tous les polluants organiques et minéraux de l'eau. L'osmose inverse est notamment utilisée pour la production d'eau de consommation humaine ou d'eau de procédé ou de chaudière à partir d'eau de mer ou d'eau saumâtre.

L'osmose inverse est également de plus en plus souvent utilisée comme traitement lors de la réutilisation d'eaux usées en vue de produire des eaux de procédé après leur passage en usine de traitement d'eaux usées.

Les membranes d'osmose inverse, comme celles de manofltration, sont fortement sensibles au colmatage et nécessitent un prétraitement des eaux pour diminuer le pouvoir colmatant. Le pouvoir colmatant d'une eau destinée à la nanofiltration ou à l'osmosé inverse est souvent mesuré par leur Silt Density Index (SDI), que les prétraitements cherchent usuellement à limiter à la valeur la plus basse possible, et, en tout cas, à une valeur inférieure ou égale à 4 (SDI ≤4).

En effet, les valeurs de SDI élevées, supérieures à 4 par exemple, entraînent un colmatage trop rapide des membranes d'osmose inverse ou de nanofltration, nécessitant le recours à de fréquents lavages chimiques des membranes qui en diminuent la durée de vie.

Les prétraitements actuellement utilisés en amont des traitements membranaires d'osmose inverse et de nanofiltration associent usuellement une séparation liquide-solide à basse vitesse (décantation simple ou lamellaire, ou encore flottation, à des vitesses inférieures à 15m/h) à une filtration sur sable et/ou charbon.

Une coagulation floculation est fréquemment réalisée en amont de la séparation liquide-solide.

L'article "Two years of nanofiltration at the Méry-sur-Oise plant, France" (B. Cyna et al., Desalination, 147, 202, p. 69-75) décrit un procédé de prétraitement en amont d'un traitement de nanofiltration, le procédé de prétraitement comprenant des étapes suivantes : séparation liquide-solide par décantation à flocs lestés par injection de sable (procédé Actiflo), traitement à l'ozone, coagulation, filtre à sable / anthracite et microfiltration.

Le SDI des eaux pré-traitées par ces techniques classiques est cependant difficile à maintenir en continu à une valeur inférieure ou égale à 4, et fluctue souvent, de manière difficile à maîtriser.

De plus, les prétraitements conventionnels nécessitent des équipements encombrants (décantation à moins de 15 m/h, filtration sur matériau granulaire en un étage, parfois même deux étages), et ne donnent pas ou difficilement en continu les valeurs recherchées de SDI inférieures à 4.

L'invention a notamment pour objectif de pallier les inconvénients de l'art antérieur.

Plus précisément, l'invention a pour objectif de proposer un procédé de traitement qui permette de mieux maîtriser l'indice de colmatage (ou SDI) des eaux traitées comparé aux solutions de l'art antérieur, voire de diminuer cet indice par rapport à celui obtenu avec les techniques connues:

L'invention a également pour objectif de fournir un tel procédé qui permette de réduire l'encombrement des installations correspondantes.

L'invention a aussi pour objectif de proposer un dispositif de mise en oeuvre d'un procédé selon l'invention.

Un autre objectif de l'invention est de proposer un tel procédé et un tel dispositif qui soient simples de conception et faciles à mettre en oeuvre.

Ces objectifs, ainsi que d'autres qui apparaîtront par la suite, sont atteints grâce à l'invention qui a pour objet un procédé de traitement d'eaux comprenant une étape de séparation liquide-solide suivi d'au moins une étape de filtration, caractérisé en ce que ladite étape de séparation liquide-solide comprend une étape de décantation réalisée à une vitesse superficielle supérieure à 15 m/h, et en ce que ladite étape de filtration est réalisée directement sur au moins une membrane de microfiltration ou d'ultrafiltration.

On comprend que, selon l'invention, le fait que l'étape de filtration soit réalisée «directement» sur membranes signifie qu'aucune filtration sur massif granulaire inerte n'est réalisée en amont de l'étape d'ultra ou de microfiltration.

L'invention va donc à l'encontre d'un à priori de l'homme du métier consistant à considérer qu'un SDI suffisamment bas ne peut être obtenu, lors d'un pré-traitement, qu'avec une décantation lente d'une part, et en combinant cette décantation à une filtration sur sable et/ou charbon d'autre part.

Or, la Demanderesse a découvert que, de manière imprévue, l'usage de techniques de séparation liquide-solide rapides, réalisées à des vitesses supérieures à 15 m/h; pouvant aller.à plus de 30 m/h, et même de 90 à 200 m/h, suivies, sans interposition d'une filtration sable ou anthracite préalable, d'une filtration directe sur membranes de micro ou d'ultrafiltration pouvait permettre, de manière compacte et économique, l'obtention d'une eau présentant en continu un SDl inférieur à 4, pouvant même descendre à des valeurs aussi basses que 3 ou même 2.

L'invention pallie les deux défauts des techniques antérieures que constituent :
- le défaut de compacité présenté par la combinaison de décanteurs fonctionnant à des vitesses inférieures à 15m/h avec une ou plusieurs étapes de filtration sur matériau granulaire (sable, ou combinaison sable anthracite, usuellement) ;
- la difficulté à obtenir en continu un SDI inférieur à 4.

Selon un premier mode de réalisation, ladite étape de séparation liquidé-solide est réalisée par décantation à floc lesté de matériau granulaire inerte fin de densité supérieure à celle de l'eau.

Dans ce cas, ladite étape de décantation à floc lesté est préférentiellement réalisée à l'aide de sable fin.

Les essais réalisés par la Demanderesse ont en effet montré que des SDI inférieurs à 4, souvent même inférieurs à 2, étaient obtenus en continu pour des eaux prétraitées par une première étape de séparation liquide solide réalisée à plus de 15m/h dans des décanteurs à floc lesté de boues du type de ceux décrits dans les documents de brevets publiés sous les numéros FR-2 553 082 et US-4 388 195, mais aussi à plus de 30 m/h par flottation et de 30 jusqu'à 90 m/h et plus en utilisant des décanteurs à floc lesté du type de ceux décrits dans les documents de brevets publiés sous les documents de brevet publiés sous les numéros FR- 2 627 704 et FR-2 719 234, puis une seconde étape de microfiltration (MF) ou ultrafiltration (UF) dans des modules de type sous pression ou de type immergé.

Selon l'invention ladite étape de séparation liquide-solide est réalisée par décantation à floc lesté par re-circulation de boues.

Selon une solution avantageuse, le procédé comprend au moins une étape de décolmatage de ladite ou desdites membranes, les eaux de décolmatage étant recyclées en amont de ladite étape de séparation liquide-solide.

Selon une variante envisageable, le procédé comprend une étape d'injection dans lesdites eaux, pendant ladite étape de séparation liquide-solide, d'au moins un des réactifs appartenant au groupe suivant :
- coagulant organique ;
- coagulant minéral ;
- floculant organique ;
- floculant minéral ;
- absorbant organique ;
- absorbant minéral.

Selon une autre variante avantageuse, le procédé comprend au moins une étape d'injection dans lesdites eaux, entre ladite étape de séparation liquide-solide et ladite étape de filtration membranaire, d'au moins un réactif oxydant.

Dans ce cas, ledit ou lesdits réactifs oxydants comprennent l'un au moins des réactifs appartenant au groupe suivant :
- ozone ;
- oxydants chlorés ;
- peroxyde d'hydrogène.

Selon encore une variante avantageuse, le procédé comprend une étape de traitement UV réalisée entre ladite étape de séparation liquide-solide et ladite étape de filtration membranaire.

Selon une autre variante, le procédé comprend au moins une étape d'injection dans lesdites eaux, entre ladite étape de séparation liquide-solide et ladite étape de filtration membranaire, de charbon actif en poudre.

Préférentiellement, le procédé comprend une étape de traitement par osmose inverse réalisée en aval de ladite étape de filtration membranaire.

Avantageusement, le procédé comprend une étape de nanofiltration réalisée en aval de ladite étape de filtration membranaire.

L'invention concerne également un dispositif de traitement d'eaux selon la revendication 12.

Préférentiellement, le dispositif comprend des moyens d'injection d'eaux de décolmatage de ladite ou desdites membranes, et des moyens de recirculation desdites eaux de décolmatage au niveau ou en amont desdits moyens de séparation liquide-solide.

Selon une solution avantageuse, le dispositif comprend des moyens d'injection d'ozone en aval ou en amont desdits moyens de séparation liquide-solide.

Avantageusement, le dispositif comprend des moyens de filtration sur membrane d'osmose inverse ou de nanofiltration en aval desdits premiers moyens de filtration.

Selon une solution avantageuse, le dispositif comprend des moyens de by-pass desdits moyens de séparation liquide-solide.

Selon encore une solution avantageuse, le dispositif comprend des moyens de by-pass desdits moyens d'injection d'ozone.

On peut ainsi réaliser un traitement direct d'ultra ou de microfiltration, dans le cas ou la qualité variable des eaux brutes permettrait un tel traitement membranaire direct avec ou sans injection de coagulant ou de floculant.

D'autres caractéristiques et avantages de l'invention apparaîtront plus clairement à la lecture de la description suivante de deux modes de réalisation préférentiels de l'invention, donnés à titre d'exemples illustratifs et non limitatifs, et des dessins annexés parmi lesquels :
- la figure 1 est une vue schématique d'un premier mode de réalisation de l'invention selon une version simplifiée ;
- la figure 2 est une vue schématique d'un deuxième mode de réalisation de l'invention selon une version préférée.

Tel qu'indiqué précédemment, le principe de l'invention consiste à prétraiter des eaux par un procédé comprenant au moins une étape de séparation liquide-solide suivie d'au moins une étape de filtration sur membranes de micro ou d'ultrafiltration, l'étape de séparation liquide-solide étant réalisée à une vitesse superficielle supérieure à 15 m/h et aucune filtration sur massif granulaire inerte n'étant réalisée en amont de l'étape d'ultra ou microfiltration.

Suivant la nature et la composition des eaux brutes à traiter, le prétraitement est amélioré par l'ajout d'un ou plusieurs réactifs parmi les suivants:
- réactif coagulant, du type minéral comme un sel de fer ou d'aluminium; ou du type organique, comme les polymères tels que le Poly(diallyldimethyl ammonium chloride (polymère organique cationique), principalement en amont de la séparation liquide-solide, mais aussi, éventuellement, en amont des membranes MF ou UF ;
- réactif de type floculant, organique comme des polymères acryliques par exemple, mais aussi minéraux, comme les argiles, principalement en amont de la séparation liquide-solide.
- oxydant ou désinfectant (principalement ozone, mais aussi chlore et ses dérivés, peroxyde d'hydrogène, ou même rayonnement UV) entre la séparation liquide-solide et la filtration MF ou UF
- absorbant organique ou minéral, comme le CAP (Charbon Actif en Poudre), soit en amont de la séparation liquide solide, soit entre cette séparation et l'étape de membranes MF ou UF.

Ces réactifs seront utilisés principalement dans les cas suivants :
- les réactifs coagulants et floculants seront utilisés pour les eaux chargées en matières organiques, en colloïdes ou en particules en sûspension ;
- l'ozone sera utilisé dans le cas d'eaux brutes chargées en algues, planctons, ou autres micro-organismes vivants, par exemple en phase de floraison algale, ainsi que dans le cas d'eaux chargées en fer ou manganèse, ou dans le cas d'eaux turbides ;
- le CAP sera utilisé dans le cas d'eaux chargées en hydrocarbures et en micro-polluants dissous, influant sur le pouvoir colmatant de l'eau.

Le procédé prévoit également le décolmatage des membranes de micro ou ultra filtration et les eaux de décolmatage sont préférentiellement re-circulées en tête du dispositif de séparation liquide-solide.

Une étape finale éventuelle d'osmose inverse ou de nanofiltration est réalisée en aval de l'étape de micro ou ultra-filtration, sur une eau prétraitée présentant ainsi un SDI toujours inférieur à 4.

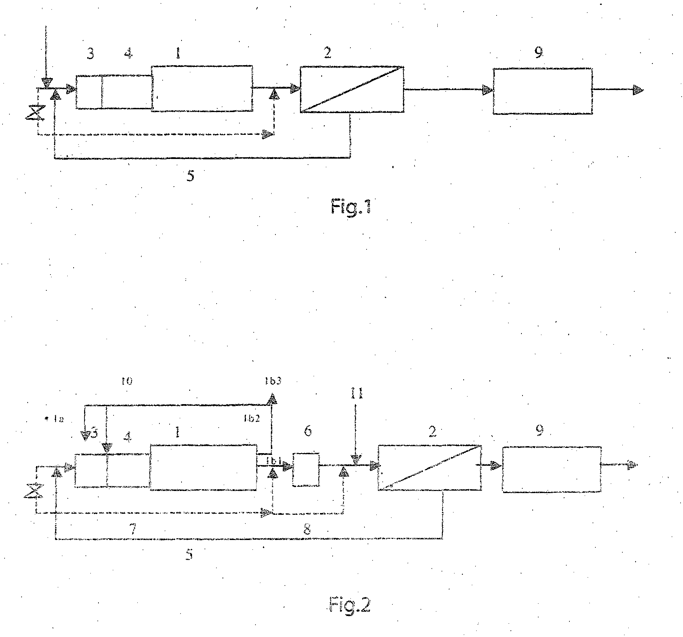

Selon une version simplifiée telle qu'illustrée par la figure 1, un dispositif pour la mise ne oeuvre du procédé tel que décrit précédemment, comprend des moyens de séparation liquide solide 1 à grande vitesse (supérieure à 15m/h), choisis parmi les techniques de décantation simple ou lamellaire, suivi d'une filtration 2 sur membranes de micro ou d'ultrafiltration.

Des moyens d'injection d'un réactif coagulant 3 et d'un réactif floculant 4 sont prévus en amont de la séparation liquide-solide.

Des moyens de recyclage 5 en amont de l'étape de séparation liquide solide des eaux de décolmatage des membranes sont présents afin de minimiser la perte d'eau.

Dans sa version préférée schématisée en figure 2, l'invention comprend des moyens de coagulation 3, floculation 4 et de décantation à floc lesté de microsable 1 à une vitesse de décantation comprise entre 15 et 200 m/h, préférentiellement entre 30 et 90 m/h.

Les moyens de séparation liquide-solide comprennent une cuve de décantation 1, en aval de la cuve de floculation 4, cette cuve de décantation étant associée à des moyens d'extraction des eaux décantées 1b1 et des moyens d'extraction des boues de décantation 1b2 prévus pour assurer une recirculation du mélange boues décantées /sable dans la cuve 4 (ou en amont de celle-ci) et une extraction des boues 1b3 vers le traitement des boues. En aval des cuves de floculation et de décantation sont prévus des moyens d'injection d'ozone 6, à un taux compris entre 0.5 et 5 mgO3/l, puis des moyens de filtration sur membranes d'ultra ou de micro- filtration dont les eaux de décolmatage sont retournées par le circuit de recyclage 5 en tête de la floculation-décantation.

Le système de traitement sera, de préférence, équipé de circuits de by-pass 7 de l'étape de séparation liquide-solide et 8 de l'étape d'ozonation éventuelle, afin de permettre un traitement direct d'ultra ou de microfiltration, dans le cas où la qualité variable des eaux brutes permettrait un tel traitement membranaire direct, avec ou sans injection de coagulant ou de floculant.

Des réactifs chimiques peuvent être injectés en tête de la séparation liquide solide à l'aide de moyens d'injection 10.

Du CAP peut être injecté également en tête de la séparation liquide solide à l'aide de moyens d'injection 10 ou 11, entre la séparation liquide solide et l'étape d'ultra ou microfiltration.

Le traitement est complété, si tel est l'objectif final du traitement, par un traitement de filtration sur membranes d'osmose inverse ou de nanofiltration 9.

Des essais ont été conduits avec le procédé et le dispositif qui viennent d'être décrits.

Les résultats, présentés en synthèse dans le tableau 1, sont les suivants. Une eau brute de surface, colorée et organique, de turbidité ayant monté jusqu'à 2 000 NTU durant les essais et dont le SDI 5 minutes était supérieur à 15, a été passée par une première étape de coagulation (au sulfate d'alumine au taux de 10 -12 mg Al/litre d'eau), de floculation, et de décantation avec lest de sable dans un décanteur à floc lesté de type ACTIFLO (marque déposée).

L'eau clarifiée, avec une turbidité inférieure à 5 NTU et un SDI 15 minutes inférieur à 6, a été alors envoyée dans un module de microfiltration de pouvoir de coupure (0,1 µm). L'eau sortant de la microfltration avait une turbidité inférieure à 0.2 NTU, et présentait en continu un SDI inférieur à 4.

**Tableau 1**

| | **Eau brute** | **Eau clarifiée** | **Eau Microfiltrée** |
|---|---|---|---|
| Turbidité NTU | 1 - 2000 | < 5 | < 0,2 |
| Couleur mg/l Pt/Co | 5 - 200 | < 5 - 10 | < 5 |
| M.O. Oxyd K MnO₄ mg/l | 2 - 15 | 1 - 5 | < 5 |
| S.D.I. | > 15 (5 min) | < 6 (15 min) | < 4 |

Des essais complémentaires (synthétisés dans le tableau 2) ont été réalisés en ajoutant une étape d'ozonation après la clarification « ACTIFLO ».

Alors que le nombre de particules était dans l'eau brute de plus de 2 000 u/ml, et dans l'eau clarifiée de moins de 500 u/ml, l'ozonation a permis de maintenir entre 50 et 100 u/ml le nombre de particules dans l'eau clarifiée ozonée, correspondant à un SDI 15 minutes inférieur à 5 (au lieu de 6 pour l'eau clarifiée sans ozonation).

Notons que le SDI obtenu après microfiltration de l'eau clarifiée ozonée a été inférieur à 3 (valeur inférieure au SDl<4 obtenu sans ozonation).

**Tableau 2**

| | **Eau brute** | **Eau clarifiée** | **Eau ozonée** |
|---|---|---|---|
| Nombre de particules u/ ml | > 2000 | < 500 | <50 - 100 |
| S.D.I. | > 15 (5 min) | < 6 (15 min) | < 5 (15 min) |

## Revendications

1. Procédé de traitement d'eaux comprenant une étape de séparation liquide-solide par décantation à flocs lestés suivie d'au moins une étape de filtration effectuée dans un réacteur distinct de celui dans lequel est effectué ladite étape de séparation,
**caractérisé en ce que** ladite étape de séparation liquide-solide par décantation à flocs lestés est réalisée avec re-circulation de boues et à une vitesse superficielle supérieure à 15 m/h, ladite étape de filtration étant réalisée directement sur au moins une membrane de microfiltration ou d'ultrafiltration, aucune filtration sur massif granulaire inerte n'étant réalisée en amont de l'étape microfiltration ou d'ultrafiltration.

2. Procédé de traitement d'eaux selon la revendication 1, **caractérisé en ce que** ladite étape de séparation liquide-solide est réalisée par décantation à floc lesté de matériau granulaire inerte fin de densité supérieure à celle de l'eau.

3. Procédé de traitement d'eaux selon la revendication 2, **caractérisé en ce que** ladite étape de décantation à floc lesté est réalisée à l'aide de sable fin.

4. Procédé de traitement d'eaux selon l'une quelconque des revendications 1 à 3, **caractérisé en ce qu'**il comprend au moins une étape de décolmatage de ladite ou desdites membranes, les eaux de décolmatage étant recyclées en amont de ladite étape de séparation liquide-solide.

5. Procédé de traitement d'eaux selon l'une quelconque des revendications 1 à 4, **caractérisé en ce qu'**il comprend une étape d'injection dans lesdites eaux, pendant ladite étape de séparation liquide-solide, d'au moins un des réactifs appartenant au groupe suivant :
- coagulant organique ;
- coagulant minéral ;
- floculant organique ;
- floculant minéral ;
- absorbant organique ;
- absorbant minéral.

6. Procédé de traitement d'eaux selon l'une quelconque des revendications 1 à 5, **caractérisé en ce qu'**il comprend au moins une étape d'injection dans lesdites eaux, entre ladite étape de séparation liquide-solide et ladite étape de filtration membranaire, d'au moins un réactif oxydant.

7. Procédé de traitement d'eaux selon la revendication 6, **caractérisé en ce que** ledit ou lesdits réactifs oxydants comprennent l'un au moins des réactifs appartenant au groupe suivant :
- ozone ;
- oxydants chlorés ;
- peroxyde d'hydrogène.

8. Procédé de traitement d'eaux selon l'une quelconque des revendications 1 à 7, **caractérisé en ce qu'**il comprend une étape de traitement UV réalisée entre ladite étape de séparation liquide-solide et ladite étape de filtration membranaire.

9. Procédé de traitement d'eaux selon l'une quelconque des revendications 1 à 8, **caractérisé en ce qu'**il comprend au moins une étape d'injection dans lesdites eaux, entre ladite étape de séparation liquide-solide et ladite étape de filtration membranaire, de charbon actif en poudre.

10. Procédé de traitement d'eaux selon l'une quelconque des revendications 1 à 9, **caractérisé en ce qu'**il comprend une étape de traitement par osmose inverse réalisée en aval de ladite étape de filtration membranaire.

11. Procédé de traitement d'eaux selon l'une quelconque des revendications 1 à 10, **caractérisé en ce qu'**il comprend une étape de nanofiltration réalisée en aval de ladite étape de filtration membranaire.

12. Dispositif de traitement d'eaux comprenant des moyens de séparation liquide-solide (1) suivis de moyens de filtration (2), **caractérisé en ce que** :
- lesdits moyens de séparation liquide-solide (1) comprennent au moins un décanteur, des moyens d'injection d'un réactif coagulant (3), au moins une cuve de floculation (4) associé à des moyens d'injection de sable fin dans ou en amont de ladite cuve de floculation, au moins une cuve de décantation (1) associée à des moyens d'extraction d'eaux décantées (1b1) et des moyens de d'extraction de boues de décantation (1b2) ;
- lesdits moyens de filtration (2) comprennent des premiers moyens de filtration prévus en aval desdits moyens de séparation liquide-solide, lesdits premiers moyens de filtration comprenant au moins une membrane de microfiltration ou d'ultrafiltration, aucun moyen de filtration sur massif granulaire inerte n'étant placé en amont de ladite au moins une membrane de microfiltration ou d'ultrafiltration ;
- ledit dispositif comprenant en outre des moyens de recirculation d'un mélange desdites boues décantées et dudit sable dans ou en amont de la cuve (4).

13. Dispositif de traitement d'eaux selon la revendication 12, **caractérisé en ce qu'**il comprend des moyens d'injection d'eaux de décolmatage de ladite ou desdites membranes, et des moyens de recirculation (5) desdites eaux de décolmatage au niveau ou en amont desdits moyens de séparation liquide-solide.

14. Dispositif de traitement d'eaux selon l'une quelconque des revendications 12 ou 13, **caractérisé en ce qu'**il comprend des moyens d'injection d'ozone (6) en aval ou en amont desdits moyens de séparation liquide-solide (1).

15. Dispositif de traitement d'eaux selon l'une quelconque des revendications 12 à 14, **caractérisé en ce qu'**il comprend des moyens de filtration (9) sur membrane d'osmose inverse ou de nanofiltration en aval desdits premiers moyens de filtration.

16. Dispositif de traitement d'eaux selon l'une quelconque des revendications 12 à 15, **caractérisé en ce qu'**il comprend des moyens de by-pass (7) desdits moyens de séparation liquide-solide.

17. Dispositif de traitement d'eaux selon l'une quelconque des revendications 14 à 16, **caractérisé en ce qu'**il comprend des moyens de by-pass (8) desdits moyens d'injection d'ozone.

## Patentansprüche

1. Verfahren zur Wasseraufbereitung, das einen Schritt der flüssig/fest-Trennung mittels Absetzenlassen beschwerter Flockungsprodukte umfasst, auf welchen mindestens ein Filtrationsschritt folgt, der in einem anderen Reaktor als der Trennungsschritt durchgeführt wird,
**dadurch gekennzeichnet, dass** der Schritt der flüssig/fest-Trennung mittels Absetzenlassen beschwerter Flockungsprodukte bei einer Oberflächengeschwindigkeit von mehr als 15 m/h mit einer Rückführung der Schlämme durchgeführt wird, wobei der Filtrationsschritt direkt an mindestens einer Mikrofiltration- oder Ultrafiltrationsmembran vorgenommen wird und im Vorfeld des Mikrofiltrations- oder Ultrafiltrationsschrittes keinerlei Filtration über ein inertes Granulatbett erfolgt.

2. Verfahren zur Wasseraufbereitung nach Anspruch 1, **dadurch gekennzeichnet, dass** der Schritt der flüssig/fest-Trennung durch Absetzenlassen von Flockungsprodukten erfolgt, welche mit einem inerten Feingranulat beschwert wurden, dessen Dichte größer als diejenige von Wasser ist.

3. Verfahren zur Wasseraufbereitung nach Anspruch 2, **dadurch gekennzeichnet, dass** der Schritt des Absetzenlassens beschwerter Flockungsprodukte mit Hilfe von feinem Sand durchgeführt wird.

4. Verfahren zur Wasseraufbereitung nach einem beliebigen der Ansprüche 1 bis 3, **dadurch gekennzeichnet, dass** es mindestens einen Schritt der Reinigung der Membran(en) umfasst, wobei das Reinigungswasser stromaufwärts des flüssig/fest-Trennungsschrittes wieder eingeleitet wird.

5. Verfahren zur Wasseraufbereitung nach einem beliebigen der Ansprüche 1 bis 4, **dadurch gekennzeichnet, dass** es einen Schritt umfasst, in welchem dem Wasser, während des flüssig/fest-Trennungsschrittes, mindestens ein Reagenz zugesetzt wird, das der folgenden Gruppe angehört:
- organisches Koagulationsmittel;
- mineralisches Koagulationsmittel;
- organisches Flockungsmittel;
- mineralisches Flockungsmittel;
- organisches Absorptionsmittel;
- mineralisches Absorptionsmittel.

6. Verfahren zur Wasseraufbereitung nach einem beliebigen der Ansprüche 1 bis 5, **dadurch gekennzeichnet, dass** es mindestens einen Schritt umfasst, in welchem dem Wasser, zwischen dem flüssig/fest-Trennungsschritt und dem Schritt der Membranfiltration, mindestens ein oxidierendes Reagenz zugesetzt wird.

7. Verfahren zur Wasseraufbereitung nach Anspruch 6, **dadurch gekennzeichnet, dass** das oder die oxidierenden Reagenzien mindestens eines der Reagenzien umfassen, die der folgenden Gruppe angehören:
- Ozon;
- chlorhaltige Oxidationsmittel;
- Wasserstoffperoxid.

8. Verfahren zur Wasseraufbereitung nach einem beliebigen der Ansprüche 1 bis 7, **dadurch gekennzeichnet, dass** es einen Schritt der UV-Behandlung umfasst, welcher zwischen dem flüssig/fest-Trennungsschritt und dem Schritt der Membranfiltration durchgeführt wird.

9. Verfahren zur Wasseraufbereitung nach einem beliebigen der Ansprüche 1 bis 8, **dadurch gekennzeichnet, dass** es mindestens einen Schritt umfasst, in welchem dem Wasser, zwischen dem flüssig/fest-Trennungsschritt und dem Schritt der Membranfiltration, pulverförmige Aktivkohle zugesetzt wird.

10. Verfahren zur Wasseraufbereitung nach einem beliebigen der Ansprüche 1 bis 9, **dadurch gekennzeichnet, dass** es einen Schritt der Behandlung mittels Umkehrosmose umfasst, welcher stromabwärts des Schrittes der Membranfiltration durchgeführt wird.

11. Verfahren zur Wasseraufbereitung nach einem beliebigen der Ansprüche 1 bis 10, **dadurch gekennzeichnet, dass** es einen Schritt der Nanofiltration umfasst, welcher stromabwärts des Schrittes der Membranfiltration durchgeführt wird.

12. Vorrichtung zur Wasseraufbereitung, die Mittel zur flüssig/fest-Trennung (1) umfasst, auf welche Filtrationsmittel (2) folgen, **dadurch gekennzeichnet, dass**:
- die Mittel zur flüssig/fest-Trennung (1) mindestens eine Absetzvorrichtung, Mittel zum Zusetzen eines koagulierenden Reagenzes (3), mindestens einen Flockungsbehälter (4) in Verbindung mit Mitteln zum Zusetzen feinen Sandes in den Flockungsbehälter oder im Vorfeld desselben, mindestens einen Absetzbehälter (1) in Verbindung mit Mitteln zur Entnahme des Wasserüberstandes (1b1) und mit Mitteln zur Entnahme der abgesetzten Schlämme (1b2) umfassen;
- die Filtrationsmittel (2) erste Filtrationsmittel umfasst, die stromabwärts der Mittel zur flüssig/fest-Trennung vorgesehen sind, wobei die ersten Filtrationsmittel mindestens eine Mikrofiltrations- oder Ultrafiltrationsmembran umfassen, wobei stromaufwärts der mindestens einen Mikrofiltrations- oder Ultrafiltrationsmembran keinerlei Mittel zur Filtration über ein inertes Granulatbett angeordnet ist;
- die Vorrichtung darüber hinaus Mittel zur erneuten Einleitung einer Mischung der abgesetzten Schlämme und des Sandes in den Behälter (4) oder stromaufwärts desselben umfasst.

13. Vorrichtung zur Wasseraufbereitung nach Anspruch 12, **dadurch gekennzeichnet, dass** sie Mittel zum Einleiten von Reinigungswasser in die Membran(en) sowie Mittel (5) zum erneuten Einleiten des Reinigungswassers im Bereich der Mittel zur flüssig/fest-Trennung oder stromaufwärts desselben umfasst.

14. Vorrichtung zur Wasseraufbereitung nach einem beliebigen der Ansprüche 12 oder 13, **dadurch gekennzeichnet, dass** sie stromabwärts oder stromaufwärts der Mittel zur flüssig/fest-Trennung (1) Mittel zum Einleiten von Ozon (6) umfasst.

15. Vorrichtung zur Wasseraufbereitung nach einem beliebigen der Ansprüche 12 bis 14, **dadurch gekennzeichnet, dass** sie stromabwärts der ersten Filtrationsmittel Mittel (9) zur Filtration über eine Umkehrosmosemembran oder zur Nanofiltration umfasst.

16. Vorrichtung zur Wasseraufbereitung nach einem beliebigen der Ansprüche 12 bis 15, **dadurch gekennzeichnet, dass** sie Mittel (7) zum Vorbeileiten an den Mitteln zur flüssig/fest-Trennung umfasst.

17. Vorrichtung zur Wasseraufbereitung nach einem beliebigen der Ansprüche 14 bis 16, **dadurch gekennzeichnet, dass** sie Mittel (8) zum Vorbeileiten an den Mitteln zur Ozoneinleitung umfasst.

## Claims

1. Method for treating water comprising a step of liquid-solid separation by decantation with ballasted flocs followed by at least a step of filtration performed in a reactor distinct from that in which said step of separation is performed,
**characterized in that** said step of liquid-solid separation by decantation with ballasted flocs is carried out with recirculating of sludges at a surface speed greater than 15 m/h, said step of filtration being performed directly on at least one micro-filtration or ultra-filtration membrane, no filtration on inert granular media being performed upstream to the step of micro-filtration or ultra-filtration.

2. Method for treating water according to claim 1, **characterized in that** said step of liquid-solid separation is performed by decantation with ballasted flocs with a fine inert granular material having a density greater than that of water.

3. Method for treating water according to claim 2, **characterized in that** said step of decantation with ballasted flocs is performed using fine sand.

4. Method for treating water according to any one of the claims 1 to 3, **characterized in that** it comprises at least one step for declogging said membrane or said membranes, the declogging water being recycled upstream to said step of liquid-solid separation.

5. Method for treating water according to anyone of the claims 1 to 4, **characterized in that** it comprises a step of injecting, into said water, during said liquid-solid separation step, at least one of the reactants belonging to the following group:
- organic coagulant;
- inorganic coagulant;
- organic flocculant;
- inorganic flocculant;
- organic absorbent;
- inorganic absorbent.

6. Method for treating water according to any one of the claims 1 to 5, **characterized in that** it comprises at least one step for injecting at least one oxidizing reactant into said water, between said step of liquid-solid separation and said step of membrane filtration.

7. Method for treating water according to claim 6, **characterized in that** said oxidizing reactant or reactants comprise at least one of the reactants belonging to the following group:
- ozone;
- chlorinated oxidants;
- hydrogen peroxide.

8. Method for treating water according to any one of the claims 1 to 7, **characterized in that** it comprises a step of UV treatment performed between said step of liquid-solid separation and said step of membrane filtration.

9. Method for treating water according to any one of claims 1 to 8, **characterized in that** it comprises at least one step of injecting powder active carbon into said water, between said step of liquid-solid separation and said step of membrane filtration.

10. Method for treating water according to any one of the claims 1 to 9, **characterized in that** it comprises a step of treatment by reverse osmosis performed downstream to said step of membrane filtration.

11. Method for treating water according to any one of claims 1 to 10, **characterized in that** it comprises a step of nanofiltration performed downstream to said step of membrane filtration.

12. Device for treating water comprising means of liquid-solid separation (1) followed by means of filtration (2), **characterized in that**:
said means of liquid-solid separation (1) comprise at least one decanter, means for injecting a coagulating reactant (3), at least one flocculation tank (4) associated with means for injecting fine sand into or upstream to said flocculation tank, at least one decantation tank (1) associated with means for extracting decanted water (1b1) and means for extracting decantation sludge (1b2);
said means of filtration (2) comprise first means of filtration provided downstream to said means of liquid-solid separation, said first means of filtration comprising at least one microfiltration or ultrafiltration membrane, no means of filtration on inert granular media being placed upstream to said at least one microfiltration or ultrafiltration membrane;
said device also comprising means for recirculating a mixture of said decanted sludges and said sand in or upstream to the tank (4).

13. Device for treating water according to claim 12, **characterized in that** it comprises means for injecting water for declogging said membrane or membranes, and means (5) for recirculating said water for declogging at or upstream to said means of liquid-solid separation.

14. Device for treating water according to any one of claims 12 or 13, **characterized in that** it includes means for injecting ozone (6) downstream from or upstream to said means of liquid-solid separation (1).

15. Device for treating water according to any one of claims 12 to 14, **characterized in that** it comprises means of filtration on reverse osmosis membrane or of nanofiltration downstream from said first filtration means.

16. Device for treating water according to any one of claims 12 to 15, **characterized in that** it comprises means (7) for bypassing said means of liquid-solid separation.

17. Device for treating water according to any one of claims 14 to 16, **characterized in that** it comprises means (8) for bypassing said means for injecting ozone.
